# EUROPÄISCHE PATENTSCHRIFT

(11) **EP 0 369 062 B1**
(45) Veröffentlichungstag und Bekanntmachung des Hinweises auf die Patenterteilung: **28.08.1996**
(21) Anmeldenummer: 88120035.6
(22) Anmeldetag: 01.12.1988
(51) Int. Cl.: E04D 11/00

(54) **Verfahren zur Bildung von Pflanzennährböden, sowie Anspritzmasse zur Durchführung des Verfahrens**
Method of forming vegetation soil, and projection material for performing the method
Procédé de réalisation d'une couche de végétation ainsi que matière de projection pour l'exécution du procédé

(30) Priorität: 17.11.1988 DE 3838899
(43) Veröffentlichungstag der Anmeldung: 23.05.1990
(73) Patentinhaber: Behrens, Wolfgang, D-27243 Gross Ippener (DE)
(72) Erfinder: Behrens, Wolfgang, D-27243 Gross Ippener (DE)
(74) Vertreter: Thömen, Uwe, Dipl.-Ing.

(56) Entgegenhaltungen:
- EP-A- 0 045 376
- EP-A- 0 047 365
- EP-A- 0 178 382
- EP-A- 0 202 346
- EP-A- 0 231 416
- DE-A- 2 044 777
- DE-A- 3 200 869
- DE-B- 1 813 080
- US-A- 4 491 608

## Beschreibung

Die Erfindung betrifft ein Verfahren zur Bildung von Pflanzennährböden auf Oberflächen von Dächern sowie anderen Baukörpern und künstlichen Ebenen, und außerdem befaßt sich die Erfindung mit einer Anspritzmasse zur Durchführung des Verfahrens.

Durch die DE-OS 32 00 869 ist bereits ein Verfahren der vorausgesetzten Gattung bekannt. Zur Bildung von Pflanzennährböden auf Oberflächen von Dächern und anderen Baukörpern in Form einer fest gebundenen Ein- oder Mehrfachschicht eines hygroskopischen, Mikro- und Makroporen bildenden Konglomerats (Kapillarbildner) wird dabei ein Kapillarbildner in Form von Schüttgut unmittelbar auf die tragende Oberfläche des Baukörpers gebracht. Außerdem ist vorgesehen, daß die aufgetragene Schüttgutschicht bis zur Verfestigung durch den Pflanzenbewuchs durch eine bindemittelartige Stoffkomponente (Bindemittel) zusammen- und am Baukörper festgehalten wird. In der genannten DE-OS 32 00 869 ist ferner auch schon vorgesehen, für eine Begrünung durch Saatgut von den sonstigen Schüttgutkomponenten getrennte Anspritzpackungen für Dünger einerseits und Anspritzpackungen der Nährlösung andererseits vorzusehen. Es werden also getrennte Verpackungen für Dünger und Nährlösung verwendet, und zwar getrennt von den sonstigen Schüttgutkomponenten. Über das Anspritzen selbst wird dabei kein Hinweis gegeben.

Das bekannte Verfahren bringt zwar eine gewisse Verbesserung, weil es möglich ist, Pflanzennährböden an Ort und Stelle auf einer zu begrünenden Baukörper-Oberfläche selbst zu bilden, gleichwohl sind dabei einige Nachteile anzutreffen. Die für die Bildung von Pflanzennährböden vorgesehene Substratgruppe umfaßt unter anderem Steinwoll-Granulat, welches die Eigenschaft hat, nur kurzfristig wasserspeichernd zu sein, weil das Steinwoll-Granulat ziemlich rasch austrocknet und nur eine begrenzte Wasserhaltekraft besitzt (Pufferung).

Außerdem ist die bekannte Substratgruppe bzw. das Steinwoll-Granulat nicht in der Lage, auf längere Dauer einen alkalischen pH-Wert von größer als 7 zu halten, was aber wiederum wichtig für trockenresistente Pflanzen ist, die auf laufende pflanzenverfügbare Kalkzufuhr (z.B. Dolomit) angewiesen sind.

Als Konsequenz der geschilderten Umstände ergibt sich, daß sich mit dem bekannten Verfahren bzw. der dabei vorgesehenen Substratgruppe Pflanzennährböden in Form von dünnen Schichten nicht realisieren lassen, weil diese schnell austrocknen. Im übrigen sind die Pflanzennährböden auch sehr pflegeintensiv, so daß eine künstliche Bewässerung erforderlich sein kann. Schließlich ist das Aufbringen der Kapillarbildner in Form von Schüttgut unmittelbar auf die tragende Oberfläche des Baukörpers im Hinblick auf die mechanische Stabilität nicht immer zufriedenstellend, wenn man berücksichtigt, daß das Schüttgut äußeren Kräften, beispielsweise durch Wind, ausgesetzt ist.

Der Erfindung liegt die Aufgabe zugrunde, ein Verfahren zur Bildung von Pflanzennährböden gemäß dem Oberbegriff des Patentanspruchs 1 zu schaffen, welches unter Vermeidung der geschilderten Nachteile auch dünne Schichten ermöglicht, und welches ferner extensiv, also pflegearm ohne die Notwendigkeit einer künstlichen Bewässerung gestaltet werden kann, und welches es schließlich ermöglicht, den Pflanzennährboden sicher auf einer Oberfläche aufzubringen. Außerdem soll durch die Erfindung eine Anspritzmasse zur Durchführung des Verfahrens geschaffen werden.

Dieses Ziel erreicht die Erfindung bei dem im Oberbegriff des Patentanspruchs 1 genannten Verfahren durch die kennzeichnenden Merkmale des Patentanspruchs 1, und hinsichtlich der Anspritzmasse wird die Aufgabe durch die Merkmale der Patentansprüche 9 und 10 gelöst.

Bei der Erfindung wird eine breiförmige Anspritzmasse mittels einer Anspritz-Feststoffpumpe auf eine gewünschte Oberfläche mit Druck gespritzt, wobei die Oberfläche zuvor mit einer Strukturschicht ausgelegt worden ist. Durch das Anspritzen wird dabei gewährleistet, daß die Anspritzmasse auch in die Oberfläche bzw. Poren der Strukturschicht eindringen kann, weil das Anspritzen unter Druck erfolgt. Dadurch werden Hohlräume vermieden, womit einer Erosionsgefahr begegnet wird. Durch die Strukturschicht selbst wird die Anspritzmasse gegen äußere Einwirkungen festgehalten und geschützt.

Mit dem erfindungsgemäßen Verfahren lassen sich problemlos auch dünnschichtige Pflanzennährböden bilden, beispielsweise ab einer Schichtdicke von 0,5 cm bei Verwendung von Trockenmoosen. Ab einer Schichtdicke von etwa 2,5 cm kommen in vorteilhafter Weise Moose und Sedumarten zur Anwendung, während ab Schichtdicken von 5 cm zusätzlich zu den Moosen und Sedumarten auch höhere Vegetationen vorgesehen werden können. Bei größeren Schichtdicken kann Gras oder Krautvegetation vorgesehen werden.

Die durch eine Bio-Masse, einem Bindemittel und einem Gleitmittel sowie durch Zugabe von Wasser gebildete Anspritzmasse, die auf die Strukturschicht gespritzt wird, führt zur Bildung eines Pflanzennährbodens, der extensiv, also hinsichtlich der Bewässerung sehr pflegearm ist.

Das Anspritzen ist im Bereich der gärtnerischen Tätigkeit zwar an sich bekannt, jedoch hat man sich bisher darauf beschränkt, nur die Saat ohne das Nährmedium selbst anzuspritzen. Außerdem erfolgte das Anspritzen nur auf eine Substratoberfläche, die zuvor schon vorhanden war.

Demgegenüber wird bei der Erfindung eine Anspritzmasse verwendet, die aus einer Bio-Masse, einem Kleber und einem Gleitmittel durch Zugabe von Wasser zu einer Breiform gemischt wird.

Dabei ist die Verwendung eines Gleitmittels von wesentlicher Bedeutung. Es hat sich nämlich gezeigt, daß sich eine breiige Masse in Form einer Bio-Masse und mit einem Bindemittel nicht ohne weiteres mit einer Anspritz-Feststoffpumpe spritzen läßt. Es wird dann vornehmlich der flüssige Anteil verspritzt, während die festeren Bestandteile zurückbleiben. Erst durch die zusätzliche Beigabe eines Gleitmittels läßt sich erreichen, die breiförmige Anspritzmasse mit Hilfe von Pumpen zu fördern und auszuspritzen bzw. anzuspritzen. Dabei wird das Gleitmittel in pflanzenverträglicher Form gewählt, so daß keine Nebenwirkungen auf die Begrünung eintreten.

Die auf die Oberfläche aufgebrachte Strukturschicht läßt sich in zweckmäßiger Weise durch eine offenporige Krallschicht - z.B. eine übliche Nylonschlingmatte - bilden, in der die Wurzeln der Pflanzen einen genügenden Halt finden können.

Zweckmäßig ist auch die Bildung der Strukturschicht durch eine Be- und Entwässerungsmatte, welche sowohl wasserspeichernde als auch wasserabgebende Eigenschaften besitzt und auf ihrer unteren Seite mit Abstandshaltern versehen ist, wodurch eine Möglichkeit für abfließendes Wasser im Sinne einer Drainage geschaffen wird. Die Be- und Entwässerungsmatte besitzt eine mittlere Trägerschicht aus mechanisch verfestigtem Polyester-Nadelvlies, wobei die Trägerschicht wasserspeichernde und wasserabgebende Eigenschaften hat. Eine solche Be- und Entwässerungsmatte ist in der deutschen Patentanmeldung P 38 05 069.2 beschrieben.

In einer anderen vorteilhaften Weiterbildung der Erfindung wird die Strukturschicht durch eine zweilagige Schicht mit einer oberen Krallschicht und einer unteren Be- und Entwässerungsmatte gebildet. Dabei können die beiden Schichten lose oder auch fest miteinander verbunden sein, beispielsweise durch Kleben oder durch Vernähen. Bei dieser Ausführungsform kann die untere Be- und Entwässerungsmatte sowohl die Form eines Wasserspeichers als auch einer Drainage übernehmen.

Auch die Verwendung einer dreilagigen Strukturschicht ist von Vorteil, und zwar mit einer oberen Krallschicht, einer mittleren Be- und Entwässerungsmatte und mit einer unteren als Drainageschicht dienenden Krallschicht. Durch diese Maßnahmen lassen sich auch große Flächen verlegen, wobei gewährleistet ist, daß ein Wasserstau vermieden werden kann und eine hinreichende Drainage durch die untere Krallschicht erfolgt.

Die bei der Erfindung verwendete Bio-Masse setzt sich vorteilhaft aus einer Mischung von einem Pflanzensubstrat, von Saatgut, von organischem Dünger, von Pflanzensprossen und von Trockenmoos zusammen. Dabei sind unter Trockenmoose solche Moose zu verstehen, die auf trockenem kalkhaltigen und der Sonne ausgesetzten Flächen wachsen können.

Als Pflanzensubstrat wird in zweckmäßiger Weise das bekannte Substrat Xero-terr verwendet, und zwar mit der besonderen Maßnahme, daß der Ton-Anteil des Pflanzensubstrats von üblicherweise 10 % auf 20 % erhöht wird. Durch diesen erhöhten Tonanteil wird in vorteilhafter Weise zugleich das weiter oben schon erwähnte Gleitmittel gebildet, um ein Anspritzen der Anspritzmasse zu ermöglichen.

Bei Verwendung von normalem üblichen Pflanzensubstrat Xero-terr mit dem Tonanteil von 10 % kann das Gleitmittel zweckmäßig durch eine gesonderte Zugabe von Calciumcarbonat gebildet werden.

In vorteilhafter Weise ist der Bio-Masse auch noch ein Bindemittel (Kunststoffdispersion), enthaltend ein Netzmittel zum Entspannen, zugegeben.

Durch das Netzmittel wird das Wasser entspannt, mit der Folge, daß die gesamte Anspritzmasse elastisch bleibt und von den Pflanzen durchwachsen werden kann. Die Anspritzmasse bzw. der daraus gebildete Pflanzennährboden ist absolut pflegearm. Selbst in der Anfangsphase, also der Keimphase, ist keine Bewässerung erforderlich. Falls die obere Schicht des Saatgutes wegen einer längeren Trockenheit austrocknen sollte, bleibt das darunter befindliche verdichtete Saatgut wegen der erwähnten elastischen Eigenschaft der An spritzmasse gleichwohl keimfähig, so daß diese untere Schicht dann nachwachsen kann.

Im übrigen ist die erfindungsgemäße Anspritzmasse im verfestigten Zustand hinreichend porös, um Oberflächenwasser durchzulassen, welches also trotz der Verfestigung nach unten gelangen kann.

Die im Patentanspruch 11 angegebenen Werte für die Zusammensetzung einer Anspritzmasse, deren Hauptbestandteil das Pflanzensubstrat ist, gelten für eine gewählte Schichtdicke von 2,5 cm Stärke. Bei anderen Schichtdicken ändern sich die Werte in etwa proportional.

Andere zweckmäßige Ausgestaltungen und vorteilhafte Weiterbildungen der Erfindung ergeben sich aus den Ansprüchen, der nachfolgenden Beschreibung und der Zeichnung.

Zum besseren Verständnis wird die Erfindung anhand der in der Zeichnung dargestellten Ausführungsbeispiele nachfolgend näher erläutert. Es zeigen:
- Fig. 1 - 4: jeweils unterschiedliche Querschnittsansichten des Aufbaus einer Strukturschicht,
- Fig. 5: eine Querschnittsansicht einer Be- und Entwässerungsmatte, und
- Fig. 6: eine schematische Darstellung einer Feststoffpumpe zum Anspritzen einer Bio-Masse.

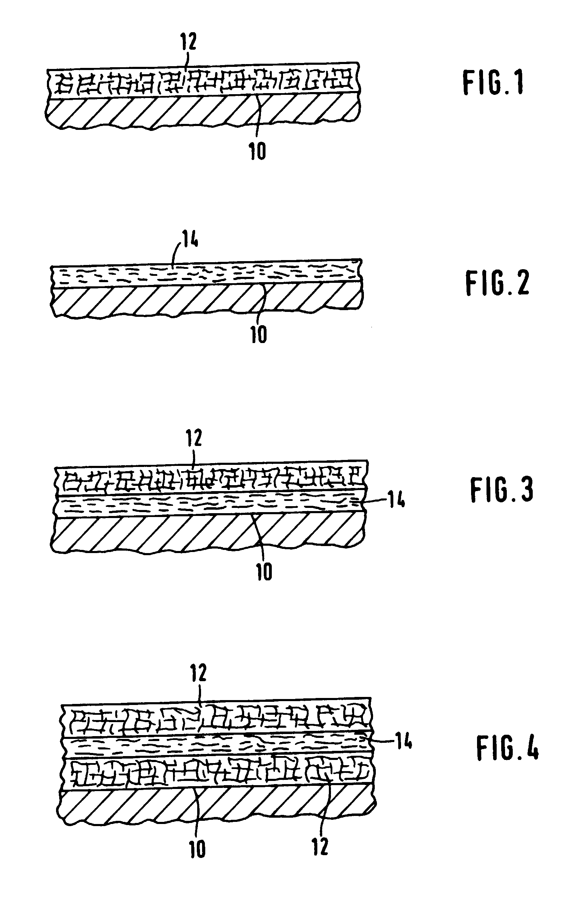

In der Darstellung gemäß Fig. 1 ist auf einer Oberfläche 10 eine Strukturschicht in Form einer Krallschicht 12 (Nylonschlingmatte) angeordnet, die stark offenporig ausgebildet ist. Aufgrund der Struktur der Krallschicht 12 finden die Wurzeln von Pflanzen einen sicheren Halt.

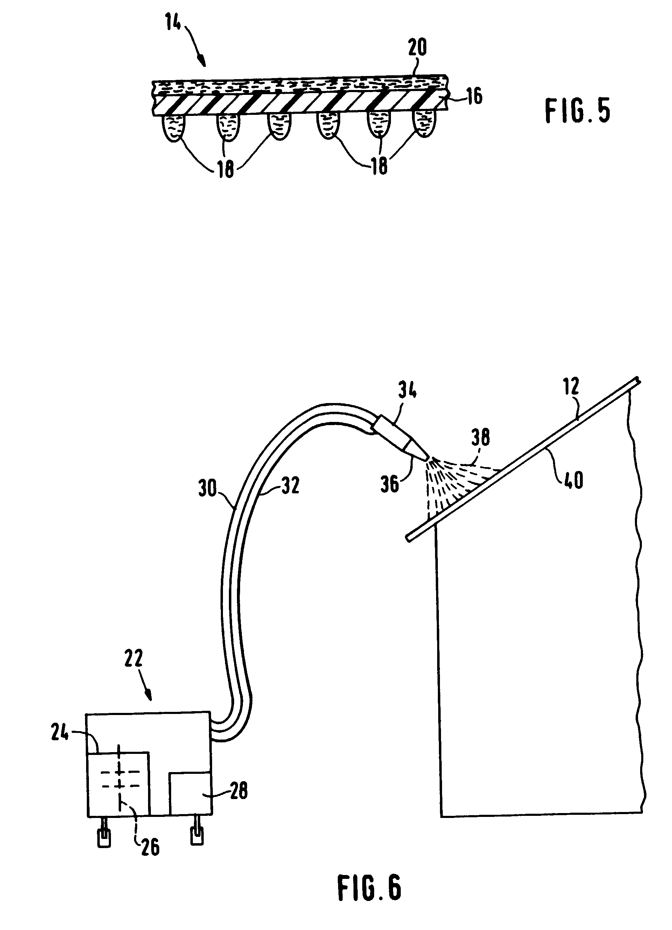

In Fig. 2 ist die Strukturschicht auf der Oberfläche 10 durch eine Be- und Entwässerungsmatte 14 gebildet, deren näherer Aufbau weiter unten noch anhand von Fig. 5 erläutert wird.

Fig. 3 zeigt eine zweilagige Strukturschicht mit einer unteren Be- und Entwässerungsmatte 14 und einer oberen Krallschicht 12, und in Fig. 4 ist eine dreilagige Strukturschicht gezeichnet. Oben und unten befinden sich jeweils eine Krallschicht 12 und in der Mitte ist eine Be- und Entwässerungsmatte 14 angeordnet.

Gemäß der Querschnittsansicht nach Fig. 5 besitzt die Be- und Entwässerungsmatte 14 eine mittlere Trägerschicht 16 aus mechanisch verfestigtem Polyester-Nadelvlies. Die mittlere Trägerschicht 16 ist für die wasserspeichernden und wasserabgebenden Eigenschaften der Be- und Entwässerungsmatte 14 verantwortlich. Die Trägerschicht ist beispielsweise 4 mm dick und besitzt ein Raumgewicht von etwa 500 g/m².

Auf die Unterseite der Trägerschicht 16 ist eine Poly-Propylen (PP)-Auflage in Form von Rippen 18 aufgenadelt, wobei Poly-Propylen in Grobfaser-Struktur verwendet wird. Durch die Rippen 18 wird ein Abstandshalter gebildet, so daß überschüssiges Wasser durch die Freiräume zwischen den Rippen 18 abfließen können.

Beim Aufnadeln der erwähnten Rippen 18 wird oberhalb der mittleren Trägerschicht 16 automatisch noch eine Oberschicht 20 gebildet, die durch das Herstellungsverfahren der Be- und Entwässerungsmatte bedingt ist und im übrigen für die eigentliche Wirkungsweise der Be- und Entwässerungsmatte 14 keine grundlegende Bedeutung hat.

Fig. 6 zeigt in schematischer Darstellung eine Feststoffpumpe 22, wie sie beispielsweise beim Anspritzen von Spritzbeton üblich ist.

Die Feststoffpumpe 22 umfaßt einen Mischbehälter 24 mit einem Rührwerk 26 sowie das eigentliche Pumpenwerk 28. An die Feststoffpumpe 22 sind ein Förderschlauch 30 sowie ein Luftschlauch 32 angeschlossen, die zu der Spritze 34 mit einer Spritzdüse 36 führen. Durch den Luftschlauch 32 wird eine Druckluft erzeugt, so daß die Anspritzmasse 38 auf ein Dach 40 gespritzt werden kann.

Für den Betrieb der Feststoffpumpe 22 wird zunächst in dem Behälter 24 mit dem Rührwerk 26 die Anspritzmasse 38 in breiiger Form hergestellt. Die Anspritzmasse besteht dabei größtenteils aus dem Pflanzensubstrat Xero-terr, dessen Tonanteil zur Bildung eines Gleitmittels erhöht ist und folgende Zusammensetzung besitzt:
20 % Lava, körnig 0/4 mm
20 % Lava, körnig 3/8 mm
10 % Dolomit, körnig 0/8 mm
20 % Ton, vergießfest
30 % Rhindenhumus, körnig 0/18 mm.

Durch den erhöhten Tonanteil wird ein Gleitmittel gebildet, so daß es möglich ist, die durch Zugabe von Wasser breiig ausgebildete Anspritzmasse mit Hilfe der Spritze 34 auf das Dach 40 bzw. die durch die Krallschicht 12 gebildete Strukturschicht zu spritzen.

Die in Breiform vorliegende Anspritzmasse, die durch Mischen in dem Mischbehälter 24 gebildet und anschließend auf das Schrägdach 40 aufgespritzt wird, setzt sich bei einer Schichtdicke von 2,5 cm für den Pflanzennährboden wie folgt zusammen:
Pflanzensubstrat Xero-terr, wie oben
erwähnt, 25 kg/m²
Saatgut, 10 g/m²
Organischer Dünger, 100 g/m²
Bindemittel (Kunststoffdispersion mit Netzmittel), 80 g/m²
Pflanzensprossen, 60 g/m²
Trockenmoose, 40 g/m².

## Patentansprüche

1. Verfahren zur Bildung von Pflanzennährböden auf Oberflächen von Dächern sowie anderen Baukörpern und künstlichen Ebenen, auf deren Oberfläche eine, wenigstens eine Krallschicht aufweisende Strukturschicht angeordnet wird, dadurch gekennzeichnet,
daß aus einer aus einer Mischung von einem Pflanzensubstrat, von Saatgut, von organischem Dünger, von Pflanzensprossen und von Trockenmoos gebildeten Bio-Masse, aus einem Bindemittel in Form eines Klebers und aus einem Gleitmittel sowie durch Zugabe von Wasser eine Anspritzmasse in Breiform in einem Mischbehälter einer Feststoffpumpe gemischt wird, und
daß die Anspritzmasse mittels der Feststoffpumpe mit Druckluft auf die Strukturschicht gespritzt wird.

2. Verfahren nach Anspruch 1, gekennzeichnet durch die Verwendung einer Strukturschicht, die durch eine offenporige Krallschicht gebildet ist.

3. Verfahren nach Anspruch 1, gekennzeichnet durch die Verwendung einer Strukturschicht, die durch eine Be- und Entwässerungsmatte gebildet ist, die sowohl wasserspeichernde als auch wasserabgebende Eigenschaften besitzt, die auf ihrer unteren Seite mit Abstandshaltern versehen ist, und die eine mittlere Trägerschicht aus mechanisch verfestigtem Polyester-Nadelvlies besitzt, wobei die Trägerschicht wasserspeichernde und wasserabgebende Eigenschaften hat.

4. Verfahren nach Anspruch 1, gekennzeichnet durch die Verwendung einer Strukturschicht, die durch eine zweilagige Schicht mit einer oberen Krallschicht und einer unteren Be- und Entwässerungsmatte gebildet ist.

5. Verfahren nach Anspruch 1, gekennzeichnet durch die Verwendung einer Strukturschicht, die durch eine dreilagige Schicht mit einer oberen Krallschicht, einer mittleren Be- und Entwässerungsmatte und einer unteren als Drainageschicht dienenden Krallschicht gebildet ist.

6. Verfahren nach einem der vorhergehenden Ansprüche 1 - 5, gekennzeichnet durch die Verwendung eines unter dem Handelsnamen Xero-Terr üblichen Pflanzensubstrats, dessen Ton-Anteil zur Bildung eines Gleitmittels erhöht ist und hier wie folgt zusammengesetzt ist:
20 % Lava, körnig 0/4 mm; 20 % Lava, körnig 3/8 mm; 10 % Dolomit, körnig 0/8 mm; 20 % Ton, vergießfest; 30 % Rhindenhumus, körnig 0/18 mm.

7. Verfahren nach einem der vorhergehenden Ansprüche 1 - 6, dadurch gekennzeichnet, daß übliches Pflanzensubstrat Xero-Terr mit normalem Tongehalt von 10 % verwendet wird, und daß das Gleitmittel durch gesonderte Zugabe von z.B. Calciumcarbonat zur Bio-Masse gebildet wird.

8. Verfahren nach einem der vorhergehenden Ansprüche 1 - 7, dadurch gekennzeichnet, daß das Wasser durch Zugabe von Netzmitteln entspannt wird.

9. Anspritzmasse zur Durchführung des Verfahrens nach einem der Ansprüche 1-8, dadurch gekennzeichnet, daß die Anspritzmasse aus einer breiförmigen, Wasser enthaltenden Mischung besteht, die aus einer von einem Pflanzensubstrat, von Saatgut, von organischem Dünger, von Pflanzensprossen und von Trockenmoos gebildeten Bio-Masse, einem Bindemittel in Form eines Klebers und einem Gleitmittel gebildet ist, und
daß die Anspritzmasse bei einer aufgespritzten Schichtdecke von 2,5 cm Stärke wie folgt zusammengesetzt ist:
unter dem Handelsnamen Xero-Terr übliches Pflanzensubstrat dessen Ton-Anteil zur Bildung eines Gleitmittels erhöht und hier wie folgt zusammengesetzt ist:
20 % Lava, körnig 0/4 mm; 20 % Lava, körnig 3/8 mm; 10 % Dolomit, körnig 0/8 mm; 20 % Ton, vergießfest; 30 % Rhindenhumus, körnig 0/18 mm, 25 kg/m² Trockengewicht;
Saatgut, 10 g/m²; organischer Dünger, 100 g/m²; Bindemittel, 80 g/m²; Pflanzensprossen, 60 g/m²; Trockenmoose, 40 g/m².

10. Anspritzmasse zur Durchführung des Verfahrens nach einem der Ansprüche 1-8, dadurch ekennzeichnet, daß die Anspritzmasse aus einer breiförmigen, Wasser enthaltenden Mischung besteht, die aus einer von einem Pflanzensubstrat, von Saatgut, von organischem Dünger, von Pflanzensprossen und von Trockenmoos gebildeten Bio-Masse, einem Bindemittel in Form eines Klebers und einem Gleitmittel gebildet ist, und
daß die Anspritzmasse bei einer aufgespritzten Schichtdecke von 2,5 cm Stärke wie folgt zusammengesetzt ist:
unter dem Handelsnamen Xero-Terr übliches Pflanzensubstrat mit folgender Zusammensetzung:
20 % Lava, körnig 0/4 mm; 20 % Lava, körnig 3/8 mm; 10 % Dolomit, körnig 0/8 mm; 10 % Ton, vergießfest; 30 % Rhindenhumus, körnig 0/18 mm, 25 kg/m² Trockengewicht;
Saatgut, 10 g/m²; organischer Dünger, 100 g/m²; Bindemittel, 80 g/m²; Pflanzensprossen, 60 g/m²; Trockenmoose, 40 g/m², und daß zusätzlich ein Gleitmittel beigegeben ist.

11. Anspritzmasse nach Anspruch 10, dadurch gekennzeichnet, daß das zusätzlich beigegebene Gleitmittel durch 50 g/m² Calciumcarbonat gebildet ist.

12. Anspritzmasse nach einem der vorhergehenden Ansprüche 9 - 11, dadurch gekennzeichnet, daß der Anspritzmasse zusätzlich ein wasserspeicherndes Granulat beigemischt ist, welches ein Vielfaches seines Eigengewichts an Wasser aufnehmen kann.

## Claims

1. Method of forming vegetation soil on surfaces of roofs and other structural objects and artificial planes, on the surface of which at least one structural layer possessing a cling layer is disposed, characterized in that a projection material is mixed in the form of a mash in a mixing vessel of a solids pump from a biomass formed from a mixture of a plant substrate, seeds, organic fertilizer, plant shoots and dry moss, from a binder in the form of an adhesive and from a lubricant and by the addition of water, and that the projection material is sprayed by means of the solids pump with compressed air onto the structural layer.

2. Method according to claim 1, characterized by the use of a structural layer which is formed of an open-pore cling layer.

3. Method according to claim 1, characterized by the use of a structural layer which is formed of an irrigation and drainage mat that possesses both water-storing and also water-yielding properties, which is provided, on its lower face, with spacers and which possesses a middle support layer of mechanically stabilized polyester needle fleece, the support layer having water-storing and water-yielding properties.

4. Method according to claim 1, characterized by the use of a structural layer, which is formed by a two-stratum layer having an upper cling layer and a lower irrigation and drainage mat.

5. Method according to claim 1, characterized by the use of a structural layer which is formed of a three-stratum layer having an upper cling layer, a middle irrigation and drainage mat and a lower cling layer serving as drainage layer.

6. Method according to one of the preceding claims 1 to 5, characterized by the use of a plant substrate known by the trade name Xero-Terr, the clay content of which is increased for the purpose of forming a lubricant and in the present case has the following composition: 20% lava, granulation 0/4 mm; 20% lava, granulation 3/8 mm; 10% dolomite, granulation 0/8 mm; 20% clay, non-pourable; 30% bark humus, granulation 0/18 mm.

7. Method according to one of the preceding claims 1 to 6, characterized in that usual plant substrate Xero-Terr with standard clay content of 10% is used, and that the lubricant is formed by a separate addition of, for example, calcium carbonate to the biomass.

8. Method according to one of the preceding claims 1 to 7, characterized in that the water is destressed by addition of wetting agents.

9. Projection material for carrying out the method according to one of claims 1 to 8, characterized in that the projection material consists of a mashy, water-containing mixture, which is formed of a biomass formed from a plant substrate, seeds, organic fertilizer, plant shoots and dry moss, a binder in the form of an adhesive and a lubricant, and that the projection material, in the case of a sprayed-on layer covering of 2.5 cm thickness, has the following composition:
usual plant substrate known by the trade name Xero-Terr, the clay content of which is increased to form a lubricant and in the present case has the following composition:
20% lava, granulation 0/4 mm; 20% lava, granulation 3/8 mm; 10% dolomite, granulation 0/8 mm; 20% clay, non-pourable; 30% bark humus, granulation 0/18 mm, 25 kg/m² dry weight;
seeds, 10 g/m²; organic fertilizer, 100 g/m²; binder, 80 g/m²; plant shoots, 60 g/m²; dry moss, 40 g/m².

10. projection material for carrying out the method according to one of claims 1 to 8, characterized in that the projection material consists of a mashy, water-containing mixture, which is formed from a biomass formed of a plant substrate, seeds, organic fertilizer, plant shoots and dry moss, a binder in the form of an adhesive and a lubricant, and that the projection material, in the case of a sprayed-on layer covering of 2.5 cm thickness, has the following composition:
plant substrate known by the trade name Xero-Terr having the following composition:
20% lava, granulation 0/4 mm; 20% lava, granulation 3/8 mm; 10% dolomite, granulation 0/8 mm; 10% clay, non-pourable; 30% bark humus, granulation 0/18 mm, 25 kg/m² dry weight;
seeds, 10 g/m²; organic fertilizer, 10 g/m²; binder, 80 g/m²; plant shoots, 60 g/m²; dry moss 40 g/m², and that a lubricant is also added.

11. Projection material according to claim 10, characterized in that the additionally added lubricant is formed by 50 g/m² of calcium carbonate.

12. projection material according to one of the preceding claims 9 to 11, characterized in that a water-storing granulate is also mixed into the projection material, which granulate can absorb water to a multiple of its own weight.

## Revendications

1. Procédé de réalisation d'une couche de végétation sur surfaces de toitures, ainsi que des surfaces d'autres corps de bâtiment et plans artificiels, sur lesquelles on dispose une couche structurelle présentant au moins une couche agglutinante, caractérisé en ce qu'on mélange une masse de projection qui est formée d'une biomasse constituée par un mélange de substrat de plantes, de semences, de fumier organique, de pousses de plantes et de mousse sèche, et d'un moyen liant sous la forme d'une colle et d'un moyen lubrifiant, avec addition d'eau, sous forme de coulis dans le récipient de mélange d'une pompe de matière solide, et en ce que la masse de projection est appliquée sur la couche structurelle, au moyen de la pompe de matière solide, avec de l'air sous pression.

2. Procédé suivant la revendication 1, caractérisé par l'utilisation d'une couche structurelle qui est formée par une couche de couche agglutinante à pores ouverts.

3. Procédé suivant la revendication 1, caractérisé par l'utilisation d'une couche structurelle qui est formée par une natte d'irrigation et de drainage qui possède des propriétés de réserve et d'approvisionnement en eau, laquelle est prévue sur son côté inférieur avec écarteurs, et qui possède une couche porteuse médiane en moquette de polyester mécaniquement consolidée, la couche support ayant des propriétés de stockage d'eau et de drainage.

4. Procédé suivant la revendication 1, caractérisé par l'utilisation d'une couche structurelle qui est formée par une double couche comportant une couche agglutinante supérieure et une natte inférieure de réserve et d'approvisionnement en eau.

5. Procédé suivant la revendication 1, caractérisé par l'utilisation d'une couche structurelle qui est formée par une triple couche comportant une couche agglutinante supérieure, une natte médiane de réserve et d'approvisionnement en eau, et une couche agglutinante inférieure servant de couche de drainage.

6. Procédé suivant une des revendications précédentes 1 à 5, caractérisé par l'utilisation d'un substrat végétal usuel sous la dénomination commerciale Xero-Terr dont la partie argileuse est augmentée pour former un milieu lubrifiant et qui est ici composé de:
20 % de lave en grains de 0/4 mm; 20 % de lave en grains de 3/8 mm; 10 % de dolomite en grains de 0/8 mm; 20 % d'argile coulée dense; 30 % d'humus de rhinden en grains de 0/18 mm.

7. Procédé suivant une des revendications précédentes 1 à 6, caractérisé en ce que du substrat végétal usuel Xero-Terr est utilisé avec une teneur normale en argile de 10 % et en ce que le moyen lubrifiant est formé pour la biomasse par addition séparée, par exemple, de carbonate de calcium.

8. Procédé suivant une des revendications précédentes 1 à 7, caractérisé en ce que l'eau est relâchée par addition d'agents mouillants.

9. Masse de projection destinée à mettre en oeuvre le procédé suivant une des revendications précédentes 1 à 8, caractérisée en ce que la masse de projection consiste en un mélange sous forme de coulis contenant de l'eau, qui consiste en une biomasse constituée par un mélange de substrat végétal, de semences, de fumier organique, de pousses végétales et de mousse sèche, en un moyen liant sous la forme d'une colle et en un lubrifiant, en ce que la masse de projection pour une couche de revêtement projetée de 2,5 cm d'épaisseur est composée comme suit:
substrat végétal usuel sous la dénomination commerciale Xero-Terr dont la partie argileuse est augmentée pour former un milieu lubrifiant et qui est composé ici comme suit:
20 % de lave en grains de 0/4 mm; 20 % de lave en grains de 3/8 mm; 10 % de dolomite en grains de 0/8 mm; 20 % d'argile coulée dense; 30 % d'humus de rhinden en grains de 0/18 mm, poids à l'état sec 25kg/m²;
semences, 10 g/m²; fumier organique, 100 g/m²; moyen liant, 80 g/m²; pousses végétales, 60 g/m²; mousse sèche, 40 g/m².

10. Masse de projection destinée à mettre en oeuvre le procédé suivant une des revendications précédentes 1 à 8, caractérisée en ce que la masse de projection consiste en un mélange sous forme de coulis contenant de l'eau, qui consiste en une biomasse constituée par un mélange d'un substrat végétal, de semences, d'un fumier organique, de pousses végétales et de mousse sèche, en un moyen liant sous la forme d'une colle et en un lubrifiant, en ce que la masse de projection pour une couche de revêtement projetée de 2,5 cm d'épaisseur est composée comme suit:
substrat végétal usuel sous la dénomination commerciale Xero-Terr dont la partie argileuse est augmentée pour former un milieu lubrifiant et qui est composé ici comme suit:
20 % de lave en grains de 0/4 mm; 20 % de lave en grains de 3/8 mm; 10 % de dolomite en grains de 0/8 mm; 20 % d'argile coulée dense; 30 % d'humus de rhinden en grains de 0/18 mm, poids à l'état sec 25kg/m²;
semences, 10 g/m²; fumier organique, 100 g/m²; moyen liant, 80 g/m²; pousses végétales, 60 g/m²; mousse sèche, 40 g/m², et en ce qu'un moyen lubrifiant supplémentaire est ajouté.

11. Masse de projection suivant la revendication 10, caractérisée en ce que le moyen lubrifiant supplémentaire est formé par 50 g/m² de carbonate de calcium.

12. Masse de projection suivant une des revendications précédentes 9 à 11, caractérisée en ce que la masse de projection est, en supplément, mélangée à un granulat stockant l'eau qui peut absorber un multiple de son poids propre en eau.
